# EUROPEAN PATENT APPLICATION

(11) **EP 3 747 261 A1**
(43) Date of publication of application: **09.12.2020**
(21) Application number: 19746994.3
(22) Date of filing: 28.01.2019
(51) Int. Cl.: A01G 25/02

(54) **EMITTER AND DRIP IRRIGATION TUBE**

(30) Priority: 30.01.2018 JP 2018013562; 28.02.2018 JP 2018034752
(71) Applicant: Enplas Corporation, Kawaguchi-shi, Saitama 332-0034 (JP)
(72) Inventor: YANAGISAWA, Kazuma, Kawaguchi-shi, Saitama 332-0034 (JP); ONO, Koki, Kawaguchi-shi, Saitama 332-0034 (JP)
(74) Representative: Epping - Hermann - Fischer
(86) International application number: PCT/JP2019/002681
(87) International publication number: WO 2019/151176

(57) **Abstract**

An emitter comprises: an emitter main body; and a discharge amount adjustment unit that adjusts the amount of irrigation liquid discharged from the discharge opening of a tube. The discharge amount adjustment unit has a diaphragm part formed integrally with the emitter main body in a position facing the inner wall surface of the tube when the emitter is joined to the inner wall surface, the diaphragm part deforming in accordance with the pressure of the irrigation fluid inside the tube. The diaphragm part has a discharge amount securing part on the surface of the side facing the inner wall surface, the discharge amount securing part securing the discharge of irrigation fluid from the discharge opening at or above a fixed amount, even if the diaphragm part deforms and adheres to the inner wall surface.

## Description

### Technical Field

The present invention relates to an emitter and a drip irrigation tube including the emitter.

### Background Art

In the related art, drip irrigation is known as a method of growing plants. The drip irrigation method is a method in which drip irrigation tubes are placed in the soil where plants are planted and irrigation liquid such as water or liquid fertilizer is dripped from the drip irrigation tubes into the soil. In recent years, drip irrigation methods have received particular attention because of their ability to minimize the consumption of liquid for irrigation.

A drip irrigation tube has a tube with a plurality of through holes through which the irrigation liquid is discharged, and a plurality of emitters (also referred to as "drippers") joined to the inner surface of said tube to discharge the irrigation liquid from each through hole (see, for example, PTL 1).

PTL 1 discloses an emitter including a body and a flap that is movable about a hinge with respect to the body. This flap is formed of a material that is similar to or preferably the same as the material of the body. In addition, this flap includes a film (diaphragm) disposed in a frame. In an operational state with the emitter that has been assembled, a recess of the body is covered with the film of the flap turned about the hinge. The recess is formed in the body with a rim provided in a frame housing as a peripheral portion. When the film of the flap is pressed against the rim, a pressure adjustment chamber is formed. The flow rate of liquid that flows out of the pressure adjustment chamber is adjusted by elastic deflection of the film in accordance with pressure variation.

### Citation List

### Patent Literature

PTL 1
WO2017/093882

### Summary of Invention

### Technical Problem

In the emitter disclosed in PTL 1, the flap and the body are integrally molded as one part in the state where the flap is open. Then, when the recess formed in the body is covered with the film of the flap, the pressure adjustment chamber that adjusts the flow rate of the liquid discharged from the emitter is formed. As such, to set the emitter to the operative state, it is necessary to perform multiple processes such as a process of turning the flap about the hinge and a process of joining the rotated flap to the body by bonding and/or welding. Such multiple processes increase the production cost of the emitter, and the production cost is desirably reduced. In particular, since the process of coupling the flap to the body by bonding, welding and/or the like largely increases the production cost, an emitter that does not require bonding, welding or the like in the production process is desired.

An object of the present invention is to provide an emitter and a drip irrigation tube that can adjust the flow rate of output liquid and reduce the production cost.

### Solution to Problem

To solve the above-described problems, an emitter according to an embodiment of the present invention is configured to be joined on an inner wall surface of a tube configured to carry irrigation liquid at a position corresponding to a discharging port configured to communicate between inside and outside of the tube, the emitter being configured to quantitatively discharge the irrigation liquid in the tube from the discharging port to the outside of the tube when the emitter is disposed at the position corresponding to the discharging port, the emitter including an emitter body; and a discharge rate adjusting part configured to adjust an amount of the irrigation liquid discharged from the discharging port. The discharge rate adjusting part includes a diaphragm part at a position that is opposite the inner wall surface of the tube when the emitter is joined to the inner wall surface, the diaphragm part being molded as one part integrated with the emitter body and configured to deform in accordance with a pressure of the irrigation liquid in the tube. The diaphragm part includes a discharge rate ensuring part in a surface on a side opposite the inner wall surface, the diaphragm part being configured to ensure discharge of the irrigation liquid of a predetermined amount or greater from the discharging port even when the diaphragm part deforms and makes intimate contact with the inner wall surface.

In addition, to solve the above-described problems, a drip irrigation tube according to an embodiment of the present invention includes a tube including a discharging port configured to discharge irrigation liquid; and the emitter that is joined at a position corresponding to the discharging port of an inner wall surface of the tube.

### Advantageous Effects of Invention

According to the present invention, the production cost of the emitter that can adjust the flow rate of output liquid can be reduced.

### Brief Description of Drawings

FIG. 1 is a sectional view of a drip irrigation tube according to an embodiment of the present invention;
FIGS. 2A and 2B illustrate a configuration of an emitter according to the embodiment of the present invention;
FIG. 3 is a sectional view of the emitter taken along line A-A of FIG. 2A;
FIGS. 4A and 4B are diagrams for describing a case where a diaphragm part makes intimate contact with an inner wall surface;
FIGS. 5A and 5B are diagrams for describing a first modification;
FIGS. 6A and 6B are diagrams for describing a second modification;
FIGS. 7A and 7B are diagrams for describing a third modification;
FIGS. 8A and 8B are diagrams for describing a fourth modification;
FIGS. 9A and 9B are diagrams for describing a fifth modification;
FIGS. 10A and 10B are diagrams for describing a sixth modification; and
FIGS. 11A and 11B of are diagrams for describing a seventh modification.

### Description of Embodiments

An embodiment of the present invention is elaborated below with reference to the accompanying drawings.

### Configurations of Drip Irrigation Tube and Emitter

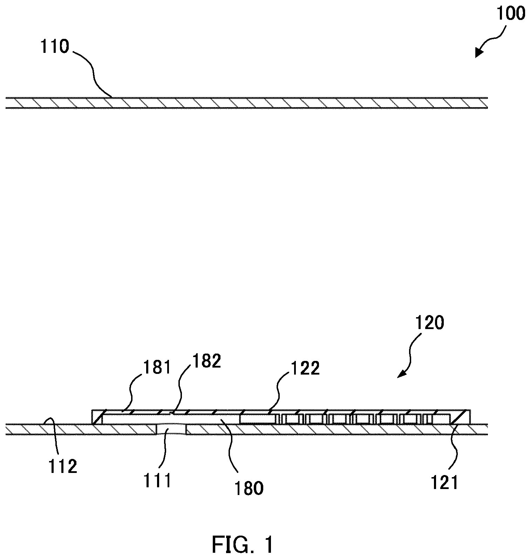

FIG. 1 is a sectional view of drip irrigation tube 100 according to the present embodiment in the direction along the axis. As illustrated in FIG. 1, drip irrigation tube 100 includes tube 110 and emitter 120.

Tube 110 is a tube for carrying irrigation liquid. Examples of the irrigation liquid include water, liquid fertilizer, agricultural chemicals and mixtures thereof. In tube 110, the flow direction of the irrigation liquid is not limited. In addition, the material of tube 110 is not limited. In the present embodiment, the material of tube 110 is polyethylene.

In the pipe wall of tube 110, a plurality of discharging ports 111 for discharging irrigation liquid are formed at a predetermined interval (e.g., from 200 mm to 500 mm) in the axis direction of tube 110. The diameter of the opening of discharging port 111 is not limited as long as the irrigation liquid can be discharged. In the present embodiment, the diameter of the opening of discharging port 111 is 1.5 mm. Each emitter 120 is joined at a position corresponding to discharging port 111 of inner wall surface 112. The shape and area of tube 110 in the cross-section perpendicular to the axis direction are not limited as long as emitter 120 can be disposed inside tube 110.

Drip irrigation tube 100 is produced by joining rear surface 121 of emitter 120 to inner wall surface 112. The method of joining tube 110 and emitter 120 is not limited. Examples of the method of joining tube 110 and emitter 120 include welding of the resin material constituting tube 110 or emitter 120 and bonding using an adhesive agent. Note that while discharging port 111 is formed after tube 110 and emitter 120 are joined in the present embodiment, discharging port 111 may be formed before they are joined.

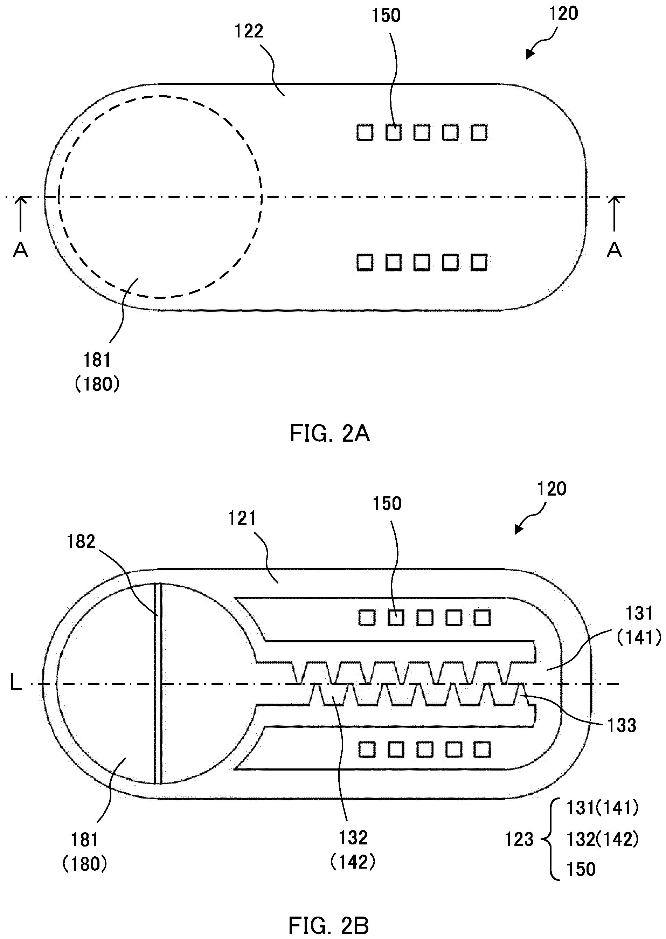

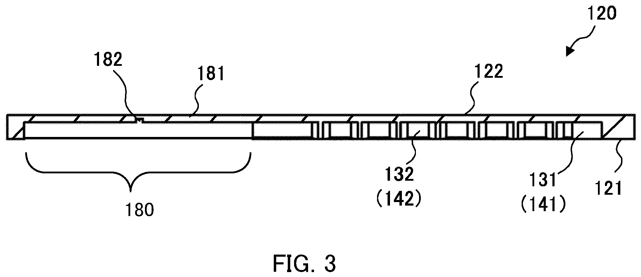

FIGS. 2A and 2B illustrate a configuration of emitter 120 according to the present embodiment. FIG. 2A is a plan view of emitter 120, and FIG. 2B is a bottom view of emitter 120. FIG. 3 is a sectional view of emitter 120 taken along line A-A of FIG. 2A.

As illustrated in FIG. 1, emitter 120 is joined to inner wall surface 112 so as to cover discharging port 111. The shape of emitter 120 is not limited as long as it can make intimate contact with inner wall surface 112 and cover discharging port 111. In the present embodiment, in the cross-section of emitter 120 perpendicular to the axis direction of tube 110, the shape of the rear surface that is joined to inner wall surface 112 is a substantially arc shape protruding toward inner wall surface 112 in a shape along inner wall surface 112. The shape in plan view of emitter 120 is a substantially rectangular shape with chamfered four corners. The size of emitter 120 is not limited. In the present embodiment, emitter 120 has a length of 19 mm in the long side direction, a length of 8 mm in the short side direction, and a height of 0.7 mm. The size of emitter 120 may be appropriately determined based on the desired discharge rate of irrigation liquid from discharging port 111.

In the present embodiment, emitter 120 is formed of a material having flexibility. Examples of the material of emitter 120 include resin, elastomer and rubber. Examples of the resin include polyethylene and silicone. The flexibility of emitter 120 can be adjusted by use of an elastic resin material. Examples of the method of adjusting the flexibility of emitter 120 include selection of elastic resins, and adjustment of the mixing ratio of the elastic resin material to the hard resin material.

As illustrated in FIGS. 2A and 2B, emitter 120 includes intake part 150, connecting groove 131 serving as connecting channel 141, pressure reducing groove 132 serving as pressure reducing channel 142, and discharge rate adjusting part 180. In the following description, the surface of emitter 120 illustrated in FIG. 2A is front surface 122, and the surface illustrated in FIG. 2B is rear surface 121. Connecting groove 131, pressure reducing groove 132 and discharge rate adjusting part 180 are disposed on the rear surface 121 side. In addition, in the following description, the configuration of emitter 120 except for discharge rate adjusting part 180, namely, the configuration including intake part 150, connecting groove 131 (connecting channel 141), and pressure reducing groove 132 (pressure reducing channel 142) is emitter body 123.

When emitter 120 and tube 110 are joined together, connecting groove 131 and pressure reducing groove 132 serve as connecting channel 141 and pressure reducing channel 142, respectively. With this configuration, a channel composed of intake part 150, connecting channel 141, pressure reducing channel 142 and discharge rate adjusting part 180, and configured to connect between intake part 150 and discharge rate adjusting part 180 is formed. This channel carries irrigation liquid from intake part 150 to discharge rate adjusting part 180.

A plurality of intake parts 150 are disposed along the longitudinal axial direction of emitter 120. In the present embodiment, five intake parts 150 are disposed at outer edges on both sides at a distance from each other (see FIGS. 2A and 2B). As illustrated in FIGS. 2A and 2B, intake part 150 is an intake through hole extending from front surface 122 to rear surface 121 of emitter 120. When emitter 120 is joined to inner wall surface 112, the irrigation liquid in tube 110 is taken into emitter 120 from the intake part 150 side.

Note that the positions of intake parts 150 are not limited to the above-described positions, and intake parts 150 may be provided in both surface sides of emitter 120 at a distance from each other as in the modification described later, for example. In addition, the number of intake parts 150 is not limited to this, and may be greater or smaller than the above.

In addition, although not illustrated in the drawings, intake part 150 may include a screen member that prevents entry of floating matters in irrigation liquid into emitter 120, and the like, for example. The shape of the screen member is not limited as long as the above-described function can be ensured. For example, the screen member has a lattice structure in which a plurality of parallel linear members overlap at different angles, or a wedge wire structure in which the width increases from the outer surface of emitter 120 toward the inner surface of intake part 150. When the screen member has the wedge wire structure as described above, the pressure drop of the irrigation liquid flowing into intake part 150 can be suppressed.

Connecting groove 131 connects between intake part 150 and pressure reducing groove 132. Connecting groove 131 is a groove linearly formed in the direction along the minor axis direction of emitter 120 on the rear surface 121 side of emitter 120. Pressure reducing groove 132 is connected at a portion in the vicinity of a center portion of connecting groove 131. When tube 110 and emitter 120 are joined to each other, connecting groove 131 and inner wall surface 112 form connecting channel 141. The irrigation liquid taken from intake part 150 flows to pressure reducing channel 142 through connecting channel 141.

Pressure reducing groove 132 connects between connecting groove 131 (connecting channel 141) and discharge rate adjusting part 180. Pressure reducing groove 132 reduces the pressure of the irrigation liquid taken from intake part 150, and guides the irrigation to discharge rate adjusting part 180. In the present embodiment, pressure reducing groove 132 is a groove disposed along the longitudinal axial direction at a center portion of rear surface 121. The upstream end of pressure reducing groove 132 is connected to connecting groove 131, and the downstream end of pressure reducing groove 132 is connected to discharge rate adjusting part 180. Pressure reducing groove 132 has a zigzag shape in plan view.

In pressure reducing groove 132, a plurality of protrusions 133 protrude from the inner surfaces on both sides in an alternate form in the flow direction of the irrigation liquid in pressure reducing channel 142 (see FIG. 2B). Preferably, in plan view of emitter 120, protrusions 133 extend from the inner surface of pressure reducing groove 132 such that the tips of protrusions 133 do not cross the center line L of pressure reducing groove 132 (see FIG. 2B). When tube 110 and emitter 120 are joined to each other, pressure reducing groove 132 and inner wall surface 112 form pressure reducing channel 142. The pressure of the irrigation liquid taken from intake part 150 is reduced by pressure reducing channel 142 and the irrigation liquid is guided to discharge rate adjusting part 180.

Discharge rate adjusting part 180 adjusts the discharge rate, from discharging port 111 of tube 110, of the irrigation liquid from pressure reducing channel 142. As illustrated in FIG. 1, when emitter 120 is joined to inner wall surface 112, discharge rate adjusting part 180 is formed by diaphragm part 181 provided opposite to inner wall surface 112 and inner wall surface 112. While diaphragm part 181 has a circular shape in plan view as illustrated in FIGS. 2A and 2B in the present embodiment, the shape of diaphragm part 181 is not limited in the present invention. In the present embodiment, diaphragm part 181 is molded as one part integrated with emitter body 123. Emitter 120 including diaphragm part 181 is produced by injection molding, for example.

As illustrated in FIGS. 1, 2B and 3, discharge rate ensuring part 182 is formed on the rear surface 121 side of diaphragm part 181 (in other words, the side of diaphragm part 181 that is opposite inner wall surface 112 when emitter 120 is joined to inner wall surface 112). In the present embodiment, discharge rate ensuring part 182 is a single groove provided through the center of diaphragm part 181. As illustrated in FIGS. 1 and 2B, discharge rate ensuring part 182 is provided such that it passes through the approximate center of discharging port 111 of tube 110.

Diaphragm part 181 is formed as one part integrated with emitter body 123, and thus diaphragm part 181 has flexibility. Diaphragm part 181 is deformed by the pressure of the irrigation liquid in tube 110 toward the inner wall surface 112 side in the state where emitter 120 is joined to inner wall surface 112.

An operation of diaphragm part 181 in accordance with the pressure of the irrigation liquid in tube 110 is described below.

Before irrigation liquid is fed into tube 110, the pressure of the irrigation liquid is not exerted on diaphragm part 181, and therefore diaphragm part 181 is not deformed (see FIG. 1).

When feeding of irrigation liquid into tube 110 is started, the pressure of the irrigation liquid in tube 110 begins to increase, and diaphragm part 181 begins to deform. When the pressure of the irrigation liquid is relatively low, the deformation of diaphragm part 181 is relatively small, and diaphragm part 181 does not make contact with inner wall surface 112. In this state, the irrigation liquid passes through the gap between diaphragm part 181 and tube 110 and is discharged from discharging port 111.

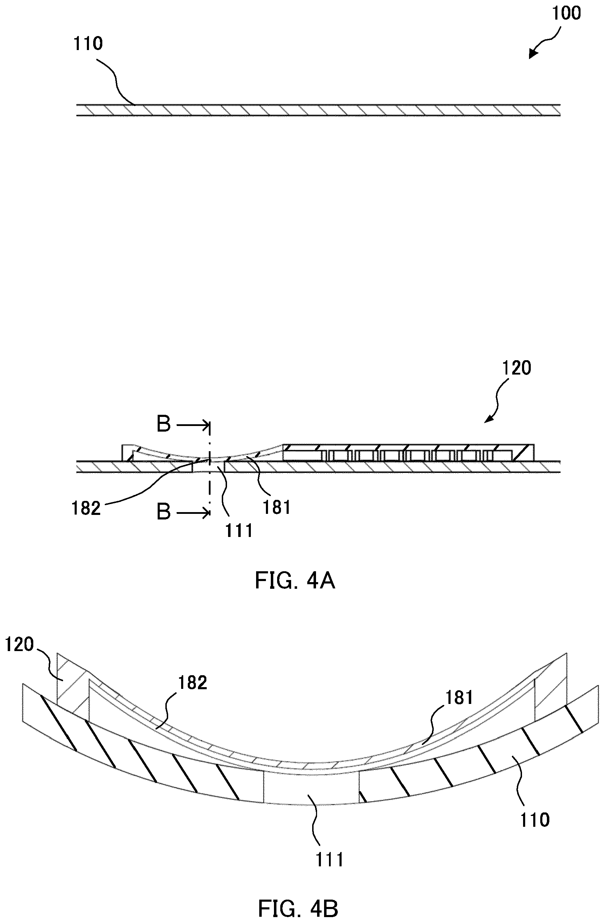

When the pressure of the irrigation liquid exceeds a set value, the deformation amount of diaphragm part 181 is further increased, and diaphragm part 181 makes intimate contact with inner wall surface 112. FIG. 4A is a sectional view in the direction along the axis of drip irrigation tube 100, and illustrates a state where diaphragm part 181 is in intimate contact with inner wall surface 112. FIG. 4B is a sectional view of emitter 120 taken along line B-B of FIG. 4A.

As illustrated in FIGS. 4A and 4B, with discharge rate ensuring part 182, discharging port 111 is not closed even when diaphragm part 181 is in intimate contact with inner wall surface 112. In this manner, even when diaphragm part 181 is in intimate contact with inner wall surface 112, irrigation liquid of a predetermined amount or greater can be discharged.

With this configuration, regardless of the pressure of the irrigation liquid, a predetermined amount or greater of irrigation liquid that is discharged from the discharging port can be ensured. That is, drip irrigation tube 100 can discharge irrigation liquid of a predetermined amount or greater to the outside of tube 110 according to the present embodiment regardless of whether the pressure of the irrigation liquid is low or high.

Note that the width of the groove as discharge rate ensuring part 182 is not limited. The width of the groove as discharge rate ensuring part 182 may be determined based on the desirable amount of the irrigation liquid that is discharged from discharging port 111 when the pressure of the irrigation liquid exceeds a set value, for example.

### Effect

As described above, emitter 120 according to the present embodiment includes emitter body 123 including intake part 150, connecting groove 131 (connecting channel 141), and pressure reducing groove 132 (pressure reducing channel 142), and discharge rate adjusting part 180 configured to adjust the discharge rate of the irrigation liquid from discharging port 111 of tube 110. Discharge rate adjusting part 180 includes diaphragm part 181 molded as one part integrated with emitter body 123 at a position that is opposite inner wall surface 112 when emitter 120 is joined to inner wall surface 112 of tube 110. Diaphragm part 181 is configured to deform in accordance with the pressure of the irrigation liquid in tube 110. Diaphragm part 181 includes, in the surface on the side opposite inner wall surface 112, discharge rate ensuring part 182 for ensuring discharge of irrigation liquid of a predetermined amount or greater from discharging port 111 even when diaphragm part 181 deforms and makes intimate contact with inner wall surface 112.

With this configuration, emitter 120 according to the present embodiment can be produced at a reduced cost in comparison with the case where a discharge rate adjusting part is formed by molding a flap that is movable with respect to the known emitter body as one part integrated with the emitter body, turning the flap about the hinge, and joining the flap to the emitter body by bonding and/or welding, for example. More specifically, the process of turning the flap and/or the process of joining the flap to the emitter body by bonding and/or welding of the known emitter can be omitted, and accordingly the production cost can be reduced.

In addition, with the above-described configuration, when diaphragm part 181 is deformed under the pressure of the irrigation liquid in tube 110, diaphragm part 181 directly makes contact with the inner wall surface of tube 110 provided with discharging port 111 in emitter 120 according to the present embodiment. Accordingly, in emitter 120 according to the present embodiment, it is not necessary to provide a member to which the deformed diaphragm part 181 is brought into intimate contact at a position opposite diaphragm part 181 in the body of emitter 120 in order to form discharge rate adjusting part 180, for example. Thus, emitter 120 according to the present embodiment can have a simpler configuration than an emitter that includes a base or the like at a position opposite diaphragm part 181 and adjusts the discharge rate through reduction of the space between diaphragm part 181 and base under the pressure of the irrigation liquid. Thus, reduction in production processes and simplification of the metal mold can be achieved, and the production cost can be reduced.

In addition, emitter 120 according to the present embodiment can adjust the discharge rate of the irrigation liquid from discharging port 111 by deforming diaphragm part 181 in accordance with the pressure of the irrigation liquid in tube 110. In particular, with discharge rate ensuring part 182, discharge of irrigation liquid of a predetermined amount or greater from discharging port 111 can be ensured even when the pressure of the irrigation liquid is higher than a set value and diaphragm part 181 largely deforms and makes intimate contact with discharging port 111. Note that in the present embodiment, discharge rate ensuring part 182 is a single groove provided through the center of diaphragm part 181.

### Modification

In the embodiment, with discharge rate ensuring part 182 that is a single groove provided through the center of diaphragm part 181, emitter 120 ensures discharge of the irrigation liquid of a predetermined amount or greater from discharging port 111 even when diaphragm part 181 deforms and makes intimate contact with the inner wall surface of tube 110. However, the present invention is not limited to this. Modifications of irrigation tube 100 of the embodiment of the present invention are described below.

### First Modification

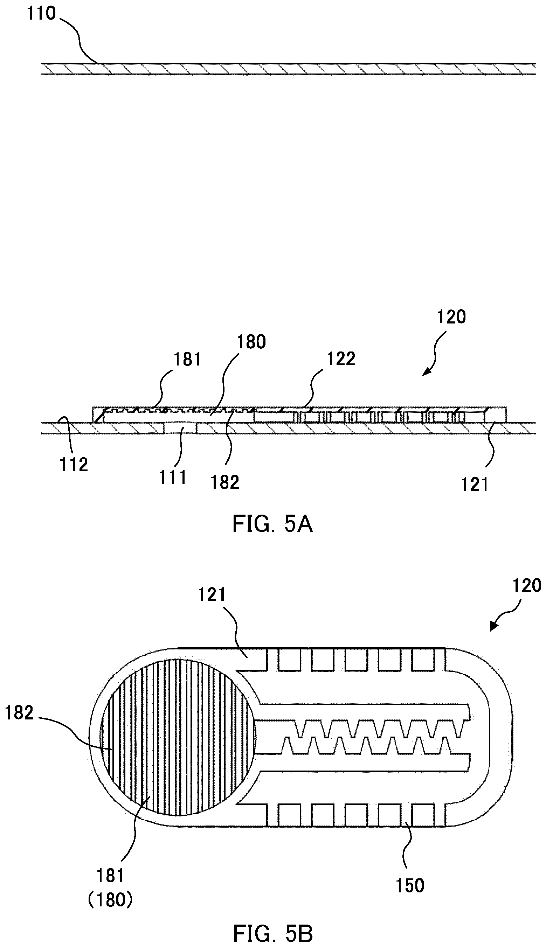

FIGS. 5A and 5B are diagrams for describing a first modification. FIG. 5A is a sectional view of drip irrigation tube 100 in the direction along the axis, and FIG. 5B is a bottom view of emitter 120.

As illustrated in FIGS. 5A and 5B, in the first modification, emitter 120 includes a plurality of grooves disposed parallel to each other as discharge rate ensuring part 182.

In the first modification, with discharge rate ensuring part 182 having such a shape, discharging port 111 of tube 110 is not closed even when diaphragm part 181 deforms and makes intimate contact with inner wall surface 112. Thus, as in the embodiment, the discharge rate of the irrigation liquid of a predetermined amount or greater from discharging port 111 can be ensured even when diaphragm part 181 is in intimate contact with inner wall surface 112.

Note that when emitter 120 is joined to inner wall surface 112 during production of drip irrigation tube 100, the center of discharging port 111 and the center of diaphragm part 181 may be shifted from each other to a certain degree. Even in such a case, in the first modification, at least one of the grooves can ensure the discharge rate of the irrigation liquid of a predetermined amount or greater from discharging port 111.

Note that as illustrated in FIGS. 5A and 5B, in the first modification, the position where intake part 150 is provided differs from the embodiment. More specifically, in the first modification, six intake parts 150 are disposed at a distance from each other in the side surfaces of emitter 120. In this manner, in the present invention, the position of intake parts 150 is not limited. For example, intake part 150 may be extended from front surface 122 to rear surface 121 of emitter 120 as in the embodiment, or may be provided in the side surfaces of emitter 120 as in the first modification. Also, the number of intake parts 150 is not limited, and may be determined based on the amount of the irrigation liquid to be taken into emitter 120, for example.

### Second Modification

As illustrated in FIGS. 2B and 5B, discharge rate ensuring part 182 whose groove has a uniform width is described in the embodiment and the first modification. However, the present invention is not limited to this.

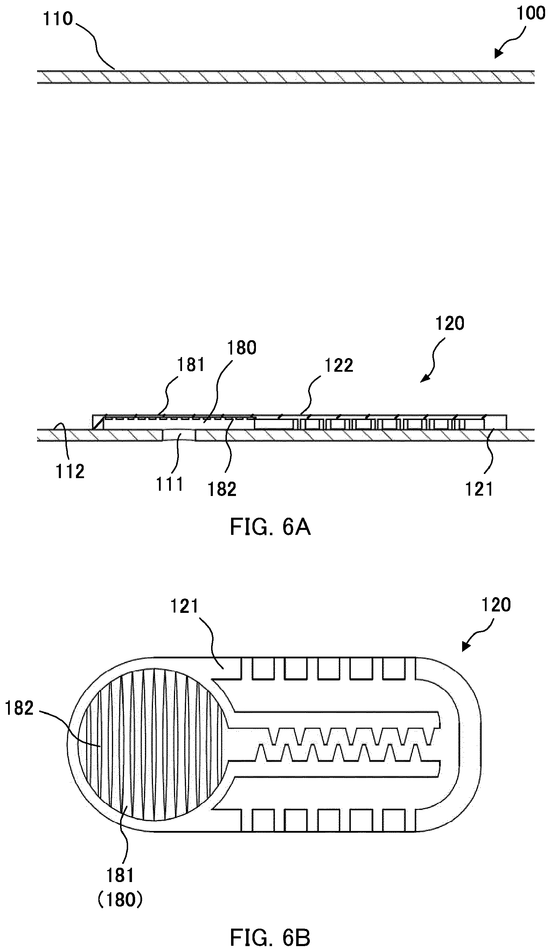

FIGS. 6A and 6B are diagrams for describing a second modification. FIG. 6A is a sectional view of drip irrigation tube 100 in the direction along the axis, and FIG. 6B is a bottom view of emitter 120.

As illustrated in FIGS. 6A and 6B, in the second modification, discharge rate ensuring part 182 is formed such that the width of the groove is not uniform, and the width of the groove increases toward the center of the groove, and decreases toward both end portions of the groove.

In second modification, the discharge rate of the irrigation liquid of a predetermined amount or greater from discharging port 111 can be ensured even when diaphragm part 181 deforms and makes intimate contact with inner wall surface 112 as in the embodiment and the first modification. In addition, in the second modification, discharge rate ensuring part 182 is formed such that the width of the groove decreases toward both end portions of the groove, and thus the area of discharge rate ensuring part 182 in the entire diaphragm part 181 is smaller than a case where the groove has a uniform width as in the first modification. With this configuration, discharge rate ensuring part 182 can be formed without reducing the strength of diaphragm part 181.

While discharge rate ensuring part 182 is formed such that the width of the groove increases toward the center of the groove and decreases toward both end portions of the groove in the second modification, the present invention is not limited to this. However, the configuration in which the width decreases toward the center of the groove of discharge rate ensuring part 182 is not desirable in the present invention. One reason for this is that, if the width decreases toward the center of the groove in discharge rate ensuring part 182, it is difficult to ensure the discharge rate of the irrigation liquid from discharging port 111 when diaphragm part 181 deforms and makes intimate contact with discharging port 111. In the second modification of the present invention, it is desirable to ensure a width of a certain value or greater at the center of the groove in discharge rate ensuring part 182.

### Third Modification

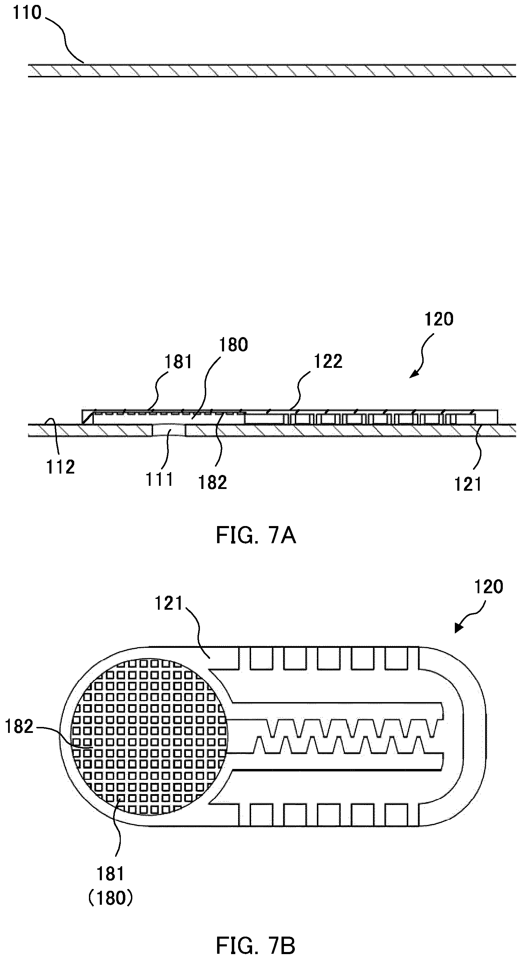

FIGS. 7A and 7B are diagrams for describing a third modification. FIG. 7A is a sectional view of drip irrigation tube 100 in the direction along the axis, and FIG. 7B is a bottom view of emitter 120.

As illustrated in FIGS. 7A and 7B, in the third modification, emitter 120 includes a plurality of grooves disposed in a lattice as discharge rate ensuring part 182.

In the third modification, with discharge rate ensuring part 182 having such a shape, discharging port 111 of tube 110 is not closed even when diaphragm part 181 deforms and makes intimate contact with inner wall surface 112. Thus, as in the embodiment, irrigation liquid of a predetermined amount or greater can be discharged even when diaphragm part 181 is in intimate contact with inner wall surface 112.

In addition, in the third modification, as in the first modification and the second modification, even when the center of discharging port 111 and the center of diaphragm part 181 are shifted from each other to a certain degree when emitter 120 is joined to inner wall surface 112, at least one of the grooves in a lattice can ensure the discharge rate of the irrigation liquid of a predetermined amount or greater from discharging port 111.

### Fourth Modification

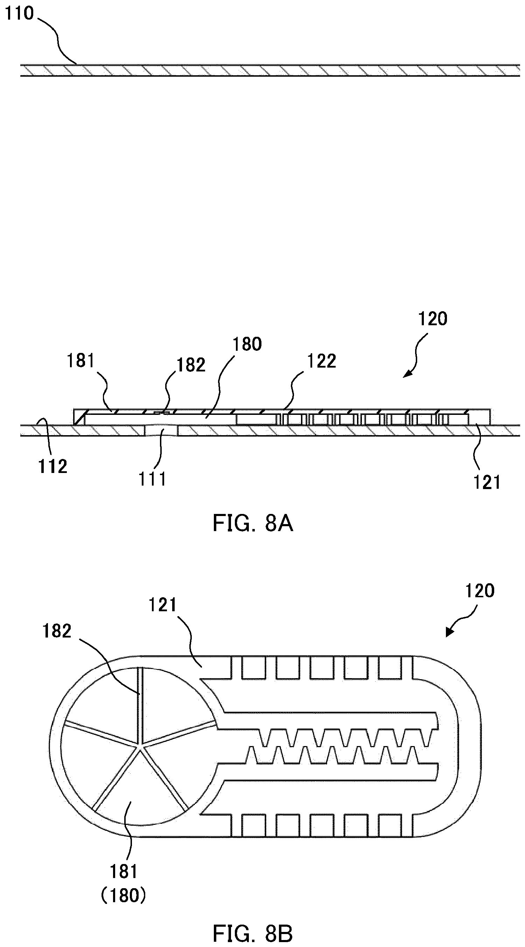

FIGS. 8A and 8B are diagrams for describing a fourth modification. FIG. 8A is a sectional view of drip irrigation tube 100 in the direction along the axis, and FIG. 8B is a bottom view of emitter 120.

As illustrated in FIGS. 8A and 8B, in the fourth modification, emitter 120 includes grooves radially extended from the center of diaphragm part 181 as discharge rate ensuring part 182.

In the fourth modification, with discharge rate ensuring part 182 having such a shape, discharging port 111 of tube 110 is not closed even when diaphragm part 181 deforms and makes intimate contact with inner wall surface 112. Thus, as in the embodiment, irrigation liquid of a predetermined amount or greater can be discharged even when diaphragm part 181 is in intimate contact with inner wall surface 112.

Note that discharge rate ensuring part 182 of the fourth modification is not limited to the plurality of grooves radially extended from the center of diaphragm part 181 as illustrated in FIG. 8B. The groove as discharge rate ensuring part 182 may be one groove extending from the center of diaphragm part 181 toward the outer peripheral edge.

### Fifth Modification

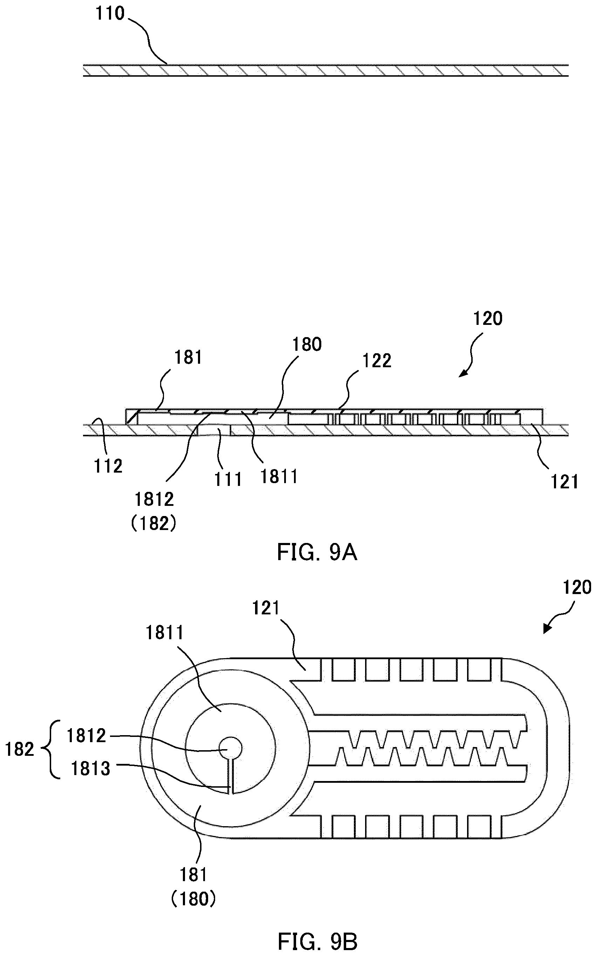

FIGS. 9A and 9B are diagrams for describing a fifth modification. FIG. 9A is a sectional view of drip irrigation tube 100 in the direction along the axis, and FIG. 9B is a bottom view of emitter 120.

As illustrated in FIGS. 9A and 9B, in the fifth modification, diaphragm part 181 includes valve seat part 1811 that protrudes toward inner wall surface 112 when emitter 120 is joined to inner wall surface 112 of tube 110.

As illustrated in FIG. 9B, in the fifth modification, valve seat part 1811 has a cylindrical shape protruding from the surface of diaphragm part 181 on the side opposite inner wall surface 112. As viewed in plan view, the center of valve seat part 1811 is the same as the center of the circular shape of diaphragm part 181. Valve seat part 1811 is disposed such that valve seat part 1811 does not make contact with inner wall surface 112 when the pressure of the irrigation liquid is smaller than a set value. Valve seat part 1811 is formed such that valve seat part 1811 can intimate contact with inner wall surface 112 when the pressure of the irrigation liquid is equal to or greater than the set value.

It should be noted that the shape of valve seat part 1811 is not limited as long as the above-described function can be ensured. For example, in plan view, the external shape of valve seat part 1811 may not be a circular shape, but may be a rectangular shape or the like.

As illustrated in FIG. 9B, recess 1812 is formed at a center portion in the surface closer to inner wall surface 112 in valve seat part 1811. Further, in the surface closer to inner wall surface 112 in valve seat part 1811, groove 1813 extending from recess 1812 to the outer peripheral edge of valve seat part 1811 is formed. Discharge rate ensuring part 182 is composed of recess 1812 and groove 1813. That is, with recess 1812 and groove 1813, discharging port 111 is not closed when diaphragm part 181 deforms and makes intimate contact with inner wall surface 112 of valve seat part 1811. Thus, even when valve seat part 1811 of diaphragm part 181 is in intimate contact with inner wall surface 112, a predetermined amount or greater amount of the irrigation liquid that is discharged from discharging port 111 can be ensured.

### Sixth Modification

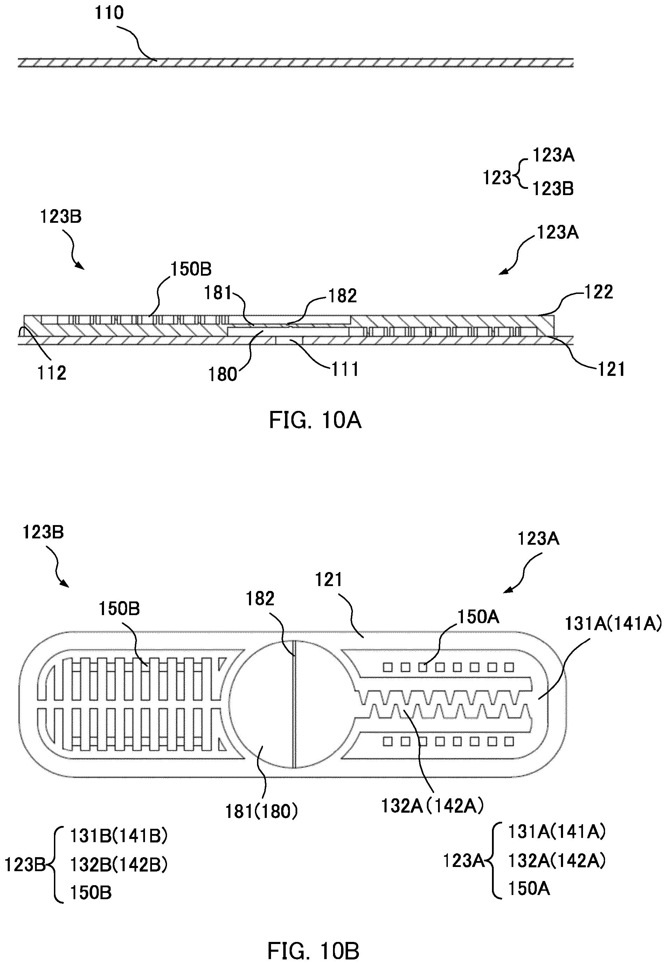

FIGS. 10A and 10B are diagrams for describing a sixth modification. FIG. 10A is a sectional view of drip irrigation tube 100 in the direction along the axis, and FIG. 10B is a bottom view of emitter 120.

As illustrated in FIGS. 10A and 10B, in the sixth modification, emitter body 123 includes first emitter body 123A and second emitter body 123B. Diaphragm part 181 is disposed between first emitter body 123A and second emitter body 123B in the extending direction of diaphragm part 181 (the horizontal direction in FIGS. 10A and 10B). Discharge rate ensuring part 182 is formed on the front surface 122 side and the rear surface 121 side of diaphragm part 181. As in the configuration illustrated in FIG. 2B, first emitter body 123A includes intake part 150A, connecting groove 131A (connecting channel 141A) and pressure reducing groove 132A (pressure reducing channel 142A). As with first emitter body 123A, second emitter body 123B includes intake part 150B, connecting groove 131B (connecting channel 141B) and pressure reducing groove 132B (pressure reducing channel 142B). First emitter body 123A and second emitter body 123B are disposed such that front and rear are reversed with respect to each other.

Note that discharge rate ensuring part 182 of the sixth modification may be formed in the configuration illustrated in FIGS. 5 to 9.

In the sixth modification, in the extending direction of diaphragm part 181, diaphragm part 181 is disposed between first emitter body 123A and second emitter body 123B whose front and rear are reversed with respect to each other. Therefore, when joining emitter 120, which is composed of a flexible material that may make it difficult to distinguish between upward and downward directions, to tube 110, the distinguish between upward and downward directions of emitter 120 is not necessary, and thus the effect of easy bonding is further achieved.

### Seventh Modification

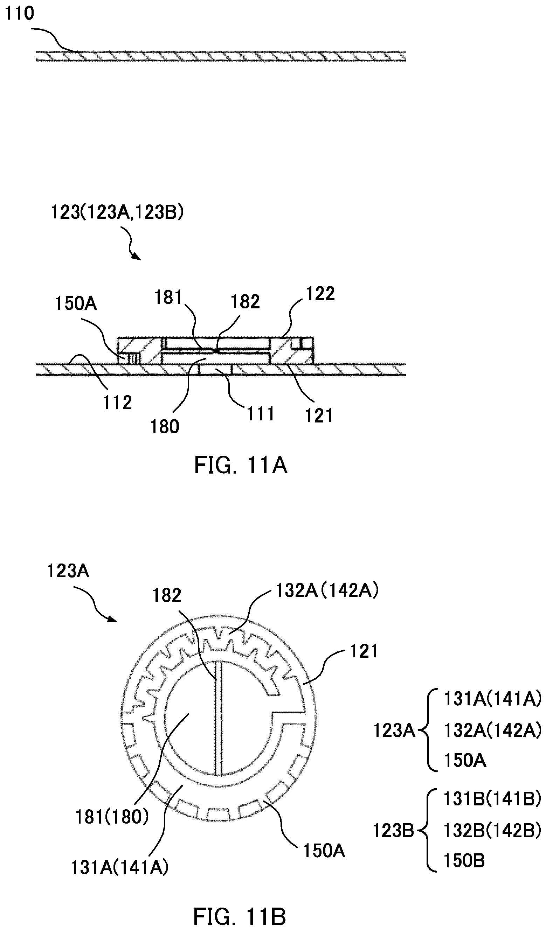

FIGS. 11A and 11B are diagrams for describing a seventh modification. FIG. 11A is a sectional view of drip irrigation tube 100 in the direction along the axis, and FIG. 11B is a bottom view of emitter 120.

As illustrated in FIGS. 11A and 11B, in the seventh modification, emitter body 123 includes first emitter body 123A and second emitter body 123B having circular shapes in plan view. First emitter body 123A and second emitter body 123B are disposed facing each other such that front and rear are reversed with respect to each other. Diaphragm part 181 is disposed at a center portion of first and second emitter bodies 123A and 123B between first emitter body 123A and second emitter body 123B in the height direction of emitter 120 (the vertical direction of FIG. 11A and the depth direction of FIG. 11B). Discharge rate ensuring part 182 is formed on the front surface 122 side and the rear surface 121 side of diaphragm part 181. Emitter body 123A includes a plurality of intake parts 150A disposed at a distance from each other in the side surface of emitter body 123A, and connecting groove 131A (connecting channel 141A) and pressure reducing groove 132A (pressure reducing channel 142A) having an arc shape in plan view. As with first emitter body 123A, second emitter body 123B includes a plurality of intake parts 150B disposed at a distance from each other in the side surface of emitter body 123B, and connecting groove 131B (connecting channel 141B) and pressure reducing groove 132B (pressure reducing channel 142B) having an arc shape in plan view.

Note that discharge rate ensuring part 182 of the seventh modification may be formed in the configurations illustrated in FIGS. 5 to 9.

In the seventh modification, first emitter body 123A and second emitter body 123B are disposed facing each other such that front and rear are reversed with respect to each other. In addition, diaphragm part 181 is disposed between first emitter body 123A and second emitter body 123B in the height direction of emitter 120. Therefore, when joining emitter 120, which is composed of a flexible material that may make it difficult to distinguish between upward and downward directions, to tube 110, the distinguish between upward and downward directions of emitter 120 is not necessary, and thus bonding can be easily performed.

This application is entitled to and claims the benefit of Japanese Patent Application No. 2018-013562 filed on January 30, 2018, and Japanese Patent Application No. 2018-034752 filed on February 28, 2018, the disclosure each of which including the specification, drawings and abstract is incorporated herein by reference in its entirety.

### Industrial Applicability

The present invention can provide an emitter that can adjust the flow rate of output liquid at reduced production cost. Accordingly, application of the above-described emitter to the above-described emitter to technical fields requiring long-term dripping such as drip irrigation and endurance test and further development of the technical fields are expected.

### Reference Signs List

- 100: Drip irrigation tube
- 110: Tube
- 111: Discharging port
- 112: Inner wall surface
- 120: Emitter
- 121: Rear surface
- 122: Front surface
- 123: Emitter body
- 131: Connecting groove
- 132: Pressure reducing groove
- 133: Protrusion
- 141: Connecting channel
- 142: Pressure reducing channel
- 150: Intake part
- 180: Discharge rate adjusting part
- 181: Diaphragm part
- 1811: Valve seat part
- 1812: Recess
- 1813: Groove
- 182: Discharge rate ensuring part

## Claims

1. An emitter configured to be joined on an inner wall surface of a tube configured to carry irrigation liquid at a position corresponding to a discharging port configured to communicate between inside and outside of the tube, the emitter being configured to quantitatively discharge the irrigation liquid in the tube from the discharging port to the outside of the tube when the emitter is disposed at the position corresponding to the discharging port, the emitter comprising:
an emitter body; and
a discharge rate adjusting part configured to adjust an amount of the irrigation liquid discharged from the discharging port,
wherein the discharge rate adjusting part includes a diaphragm part at a position that is opposite the inner wall surface of the tube when the emitter is joined to the inner wall surface, the diaphragm part being molded as one part integrated with the emitter body and configured to deform in accordance with a pressure of the irrigation liquid in the tube, and
wherein the diaphragm part includes a discharge rate ensuring part in a surface on a side opposite the inner wall surface, the diaphragm part being configured to ensure discharge of the irrigation liquid of a predetermined amount or greater from the discharging port even when the diaphragm part deforms and makes intimate contact with the inner wall surface.

2. The emitter according to claim 1, wherein the discharge rate ensuring part is at least one groove provided in the surface of the diaphragm part on the side opposite the inner wall surface.

3. The emitter according to claim 2, wherein the at least one groove is a plurality of grooves; and
wherein the plurality of grooves are disposed parallel to each other.

4. The emitter according to claim 2 or 3, wherein a width of the at least one groove differs between an end portion and a center portion.

5. The emitter according to claim 2, wherein the at least one groove is disposed extending from a center of the diaphragm part toward a peripheral portion.

6. The emitter according to claim 5, wherein the at least one groove is a plurality of grooves; and
wherein the plurality of grooves are radially disposed.

7. The emitter according to claim 2, wherein the at least one groove is a plurality of grooves; and
wherein the plurality of grooves are disposed in a lattice.

8. The emitter according to claim 1,
wherein the diaphragm part includes a valve seat part protruding from the surface on the side opposite the inner wall surface of the tube, the valve seat part being disposed such that the valve seat part does not make contact with the inner wall surface when the diaphragm part is not deformed; and
wherein the valve seat part includes the discharge rate ensuring part in the surface on the side opposite the inner wall surface, the discharge rate ensuring part being configured to ensure discharge of the irrigation liquid of a predetermined amount or greater from the discharging port even when the diaphragm part deforms and makes intimate contact with the inner wall surface.

9. The emitter according to claim 1, wherein the emitter body includes
a first emitter body;
a second emitter body, the second emitter body being disposed such that a front and a rear are reversed with respect to the first emitter body, and
wherein the diaphragm part is disposed between the first emitter body and the second emitter body in an extending direction of the diaphragm part.

10. The emitter according to claim 1, wherein the emitter body includes
a first emitter body;
a second emitter body disposed facing the first emitter body such that a front and a rear of the second emitter body are reversed with respect to the first emitter body, and
wherein the diaphragm part is disposed between the first emitter body and the second emitter body in a height direction of the emitter.

11. A drip irrigation tube comprising:
a tube including a discharging port configured to discharge irrigation liquid; and
the emitter according to any one of claims 1 to 10 that is joined at a position corresponding to the discharging port of an inner wall surface of the tube.
